# EUROPEAN PATENT APPLICATION

(11) **EP 1 983 736 A2**
(43) Date of publication of application: **22.10.2008**
(21) Application number: 08153997.5
(22) Date of filing: 03.04.2008
(51) Int. Cl.: H04N 1/00

(54) **Mobile telephony device having a print request dedicated key for transmitting digital images to a printing system**

(30) Priority: 17.04.2007 US 787862
(71) Applicant: Xerox Corporation, Rochester, New York 14644 (US)
(72) Inventor: Robson, Thomas, Rochester, NY 14625 (US)
(74) Representative: Grünecker, Kinkeldey, Stockmair & Schwanhäusser Anwaltssozietät

(57) **Abstract**

A mobile telephony device is provided having a print request dedicated key, a digital image acquiring assembly for acquiring at least one digital image, and a processor in operative communication with the print request dedicated key for initiating printing of the at least one digital image in response to selection of the print request dedicated key by a user of the mobile telephony device. The processor includes a memory module configured for storing digital images acquired by the digital image acquiring assembly. The processor further includes a transmission module programmed with transmission instructions for transmitting the at least one digital image in response to the selection of the print request dedicated key. The processor further includes a payment module programmed with payment-related information capable of being transmitted by the transmission module for use in effecting payment to a service provider or an order fulfillment location for printing the at least one digital image.

## Description

### BACKGROUND

The present disclosure relates to the field of mobile telephony, and more particularly, to a mobile telephony device having a print request dedicated key for transmitting digital images to a printing system for printing thereof. The printing system includes a digital image processing module for color calibrating the digital images prior to printing for optimum printing results.

Mobile telephony devices, including cellular or mobile radiotelephones having radio features, and the ability to acquire and store digital images are popular. The digital, still images are generally transmitted via a USB cable or wirelessly to a computing device or system, such as a printer, for reproducing or printing the still images. When using the USB cable to transmit the still images to the computing device or system, an application program is executed by a processor enabling the digital images stored within the mobile telephony device to be transmitted and stored within a memory module of the computing device or system. The user can then select one or more transmitted digital images for printing.

When wirelessly transmitting the digital, still images to the computing device or system, the user provides an email address to the mobile telephony device using a key pad of the mobile telephony device, or selects an email address previously provided to the mobile telephony device using the key pad, and transmits the selected digital images as an email transmission to the email address by pressing a SEND key on the key pad. The digital images can then be printed by a recipient of the email transmission using a printer connected to the computing device or system.

### SUMMARY

It is an aspect of the present disclosure to provide a mobile telephony device having a print request dedicated key enabling a user to transmit digital images from the device to a printing system using one or more communication protocols by pressing the dedicated key.

It is also an aspect of the present disclosure to provide a printing system having a color processing and formatting module capable of color processing and formatting digital images received from a mobile telephony device for optimum printing results, including applying color correction and calibration techniques to the digital images.

According to the present disclosure, a mobile telephony device is provided having a print request dedicated key, a digital image acquiring assembly for acquiring at least one digital image, and a processor in operative communication with the print request dedicated key for initiating printing of the at least one digital image in response to selection of the print request dedicated key by a user of the mobile telephony device. The processor includes a memory module configured for storing digital images acquired by the digital image acquiring assembly.

The processor further includes a transmission module programmed with transmission instructions for transmitting the at least one digital image in response to the selection of the print request dedicated key which causes a transmission signal to be transmitted to the processor from the print request dedicated key. The processor further includes a payment module programmed with payment-related information capable of being transmitted by the transmission module for use in effecting payment to a service provider or an order fulfillment location for printing the at least one stored digital image.

The service provider can be selected using Location Based Services (LBS) technology to find the closest fulfillment location to the mobile telephony device's current location. The preferred service provider can also be programmed by the user and stored within the memory module, such that the transmission module transmits the at least one stored digital image and the payment-related information to the programmed service provider.

The payment-related information includes an account number or an identification code for enabling the service provider to identify the user and correlate the identified user to a corresponding payment source, including corresponding user printing preferences or settings for use in printing the at least one digital image, using one or more lookup tables or other data structures maintained by the service provider. The payment-related information can also include payment source information, such as credit card information corresponding to a credit card to be charged and bank account information corresponding to a bank account to be debited for effecting payment for the service provider.

The present disclosure further provides a printing system maintained and operated by the service provider. The printing system includes at least one processor, and a printing device, such as a color printer, having a digital image printing assembly for printing a digital image received by a mobile telephony device. The at least one processor includes a digital image processing module for analyzing one or more color-related attributes of the digital image and determining whether to execute a color calibration application program prior to printing the digital image using the digital image printing assembly.

It is contemplated that the color calibration application program utilizes color calibration factors stored within a database in operative communication with the at least one processor. It is further contemplated that the mobile telephony device transmits to the at least one processor information identifying the make and model of the mobile telephony device. The database stores color calibration factors corresponding to a plurality of makes and models of mobile telephony devices. The at least one processor accesses the color calibration factors corresponding to the make and model of the mobile telephony device and then executes the color calibration application program using the accessed color calibration factors for color calibrating the received digital image for obtaining optimum printing results of the digital image.

In one embodiment of the mobile telephony device according to Claim 1, the device further comprises a touch-screen display, wherein the print request dedicated key is a virtual key displayed by the touch-screen display.

In a further embodiment of the mobile telephony device according to Claim 4, the transmission module transmits the make and model of the mobile telephony device for use in color calibrating the at least one digital image prior to printing.

In one embodiment of the printing system according to Claim 9, the digital image processing module determines whether to execute a color calibration application program based on the analysis of the at least one color-related attribute of the digital image.

In a further embodiment the printing system further comprises a database in operative communication with the at least one processor, wherein the color calibration application program utilizes color calibration factors stored within the database.

In a further embodiment the database stores color calibration factors corresponding to a plurality of makes and models of mobile telephony devices, and wherein the at least one processor accesses the color calibration factors corresponding to the make and model of the mobile telephony device prior to executing the color calibration application program for color calibrating the digital image.

In a further embodiment the at least one processor compares the digital image with at least one stored digital image for determining the level of color calibration for the digital image based on the comparison.

In a further embodiment the at least one processor is further configured to receive user preferences from the mobile telephony device, the user preferences selected from the group consisting of printing size, formatting options, and number of digital images to print.

In a further embodiment the printing system further comprises a database storing payment information corresponding to at least one registered member, the payment information being used for effecting payment for the printing of the digital image by the printing device.

In a further embodiment one of the at least one processor and the database stores costs for color calibrating and printing the digital image.

In one embodiment of the method according to Claim 10, the method further comprises delivering the printed digital image to an address corresponding to a user of the mobile device.

### BRIEF DESCRIPTION OF THE DRAWINGS

Various embodiments of the present disclosure will be described herein below with reference to the figures wherein:
FIG. 1 is a perspective view of a mobile telephony device having a print request dedicated key for transmitting digital images to a printing system in accordance with the present disclosure;
FIG. 2 is a block diagram of a printing system in accordance with the present disclosure; and
FIG. 3 is a flow chart illustrating the steps for performing a digital image printing method in accordance with the present disclosure.

### DETAILED DESCRIPTION

The present disclosure provides a mobile telephony device having a print request dedicated key, a digital image acquiring assembly for acquiring at least one digital image, and a processor in operative communication with the print request dedicated key for initiating printing of the at least one digital image in response to selection of the print request dedicated key by a user of the mobile telephony device. The processor includes a memory module configured for storing digital images acquired by the digital image acquiring assembly.

The processor further includes a transmission module programmed with transmission instructions for transmitting the at least one digital image in response to the selection of the print request dedicated key which causes a transmission signal to be transmitted from the print request dedicated key to the processor. The processor further includes a payment module programmed with payment-related information capable of being transmitted by the transmission module for use in effecting payment to a service provider or an order fulfillment location for printing the at least one digital image.

The service provider can be selected using Location Based Services (LBS) technology to find the closest fulfillment location to the mobile telephony device's current location. The preferred service provider can also be preprogrammed by the user and stored within the memory module, such that the transmission module transmits the at least one stored digital image and the payment-related information to the preprogrammed service provider.

The payment-related information includes an account number or an identification code for enabling the service provider to identify the user and correlate the identified user to a corresponding payment source, including corresponding user printing preferences or settings for use in printing the at least one digital image, using one or more lookup tables or other data structures maintained by the service provider. The payment-related information can also include payment source information, such as credit card information corresponding to a credit card to be charged and bank account information corresponding to a bank account to be debited for effecting payment for the service provider.

The present disclosure further provides a printing system maintained and operated by the service provider. The printing system includes at least one processor, and a printing device, such as a color printer, having a digital image printing assembly for printing a digital image received by the mobile telephony device. The at least one processor includes a digital image processing module for analyzing one or more color-related attributes of the digital image and determining whether to execute a color calibration application program prior to printing the digital image using the digital image printing assembly.

It is contemplated that the color calibration application program utilizes color calibration factors stored within a database in operative communication with the at least one processor. It is further contemplated that the mobile telephony device transmits to the at least one processor information identifying the make and model of the mobile telephony device. The database stores color calibration factors corresponding to a plurality of makes and models of mobile telephony devices. The at least one processor accesses the color calibration factors corresponding to the make and model of the mobile telephony device and then executes the color calibration application program using the accessed color calibration factors for color calibrating the received digital image for obtaining optimum printing results of the digital image.

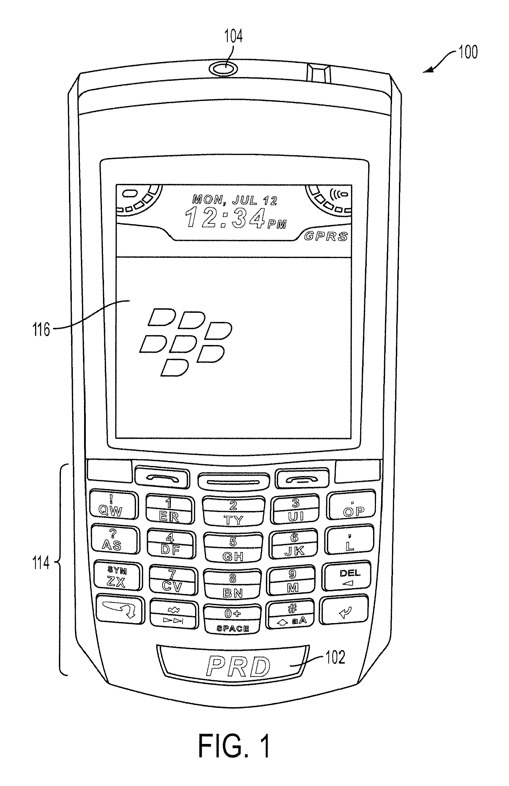

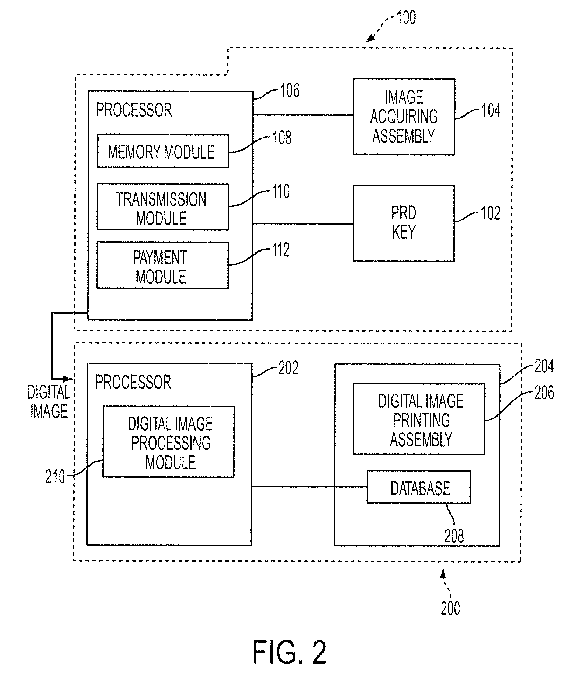

In particular, with reference to FIG. 1, there is shown a perspective view of a mobile telephony device in accordance with the present disclosure and designated generally by reference numeral 100. The device 100 has a print request dedicated (PRD) key 102 for transmitting digital images to a printing system 200 (see FIG. 2) for printing thereof.

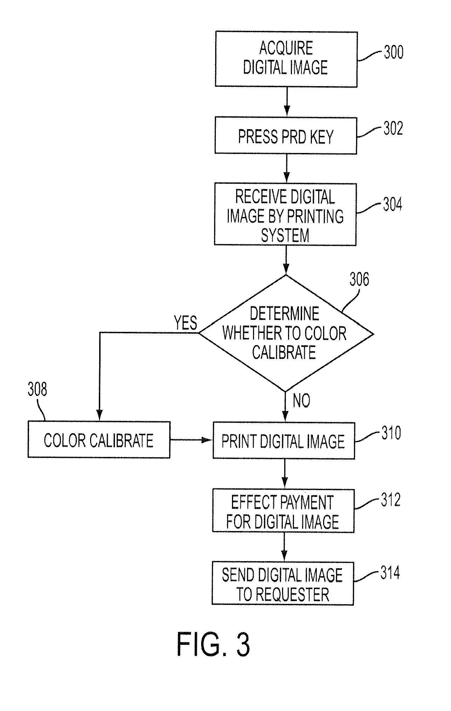

The mobile telephony device 100 further includes a digital image acquiring assembly 104 for acquiring one or more digital images (Step 300 of FIG. 3), and a processor 106 (see FIG. 2) in operative communication with the print request dedicated key 102 for initiating printing of the at least one digital image in response to selection of the print request dedicated key by a user of the mobile telephony device.

The processor 106 includes a memory module 108 (see FIG. 2) configured for storing digital images acquired by the digital image acquiring assembly 104. The processor 106 further includes a transmission module 110 (see FIG. 2) programmed with transmission instructions for transmitting the at least one digital image in response to the selection of the print request dedicated key which causes a transmission signal to be transmitted from the print request dedicated key 102 to the processor 106.

The processor 106 further includes a payment module 112 (see FIG. 2) programmed with payment-related information capable of being transmitted by the transmission module 110 for use in effecting payment to a service provider or an order fulfillment location for printing the at least one stored digital image. The information of the transmission module 110 and the payment module 112 can be stored within the memory module 108.

In FIG. 1, the print request dedicated key 102 is shown as being one of a plurality of keys of key pad 114. It is contemplated that the print request dedicated key 102 can be a virtual key displayed by display 116 of device 100, where display 116 is a touch-screen display.

Selection of the key 102 by touching or pushing of the key 102 (Step 302) causes a signal to be transmitted to the processor 106. In turn, the processor 106 executes the transmission instructions of the transmission module 110 and the at least one digital image, as well as the payment-related information of the payment module 112, is transmitted to the service provider (Step 304).

The service provider can be selected using Location Based Services (LBS) technology to find the closest fulfillment location to the mobile telephony device's current location. The preferred service provider can also be preprogrammed by the user and stored within the memory module, such that the transmission module 110 transmits the at least one stored digital image and the payment-related information to the preprogrammed service provider.

The payment-related information includes an account number or an identification code for enabling the service provider to identify the user and correlate the identified user to a corresponding payment source, including corresponding user printing preferences or settings for use in printing the at least one digital image, using one or more lookup tables or other data structures maintained by the service provider. The payment-related information can also include payment source information, such as credit card information corresponding to a credit card to be charged and bank account information corresponding to a bank account to be debited for effecting payment for the service provider.

With reference to FIG. 2, there is shown an exemplary printing system 200 in accordance with the present disclosure which is maintained and operated by the service provider. The printing system 200 includes at least one processor 202, and a printing device 204, such as a color printer, having a digital image printing assembly 206 for printing a digital image received from the mobile telephony device 100. The at least one processor 202 is configured to receive a digital image from the mobile telephony device 100 via a wireless or non-wireless connection.

The at least one processor 202 includes a digital image processing module 210 for analyzing one or more color-related attributes of the digital image and determining whether to execute a color calibration application program prior to printing the digital image using the digital image printing assembly 206 (Step 306).

It is contemplated that the color calibration application program utilizes color calibration factors stored within a database 208 in operative communication with the at least one processor 202. It is further contemplated that the transmission module 110 of the mobile telephony device 100 transmits to the at least one processor 202 information identifying the make and model of the mobile telephony device 100. The database 208 stores color calibration factors corresponding to a plurality of makes and models of mobile telephony devices. The at least one processor 202 accesses the color calibration factors corresponding to the make and model of the mobile telephony device 100 and then executes the color calibration application program using the accessed color calibration factors for color calibrating the received digital image for obtaining optimum printing results of the digital image (Step 308).

Alternatively or additionally, the database 208 stores digital images and the at least one processor 202 compares the received digital image with one or more stored digital images for determining the level of color calibration for the received digital image based on the comparison.

The at least one processor 202 of the printing system 200 executes a series of programmable instructions for parsing the data received from the mobile telephony device 100 between digital images and payment-related information. The received data can include user preferences, such as the desired printing size, formatting options, number of digital images to print for each digital image, etc.

The user preferences can be programmed by using an application program executed by the mobile telephony device 100. The user preferences can also be selected following selection of the print request dedicated key 102 using the key pad 114 and display 116 of the device 100 (or just the display 116 if the display 116 is a touch-screen display). If the user preferences and the payment information are programmed and stored within the memory module 108 of the processor 106, selection of the print request dedicated key 102 is the only action necessary (i.e., single action digital image ordering) to be performed by the requesting individual or user for initiating the transmission of the at least one digital image for color calibrating, if necessary, and printing thereof by the printing system 200, and subsequent mailing or delivery of the printed digital image to the requesting individual.

Once the received data is parsed by the at least one processor 202, the digital images are color calibrated (if necessary, as determined by Step 306) and printed by the digital image printing assembly 206 of the printing device 204 (Step 310) and the payment-related information is used by the at least one processor 202 for effecting payment to the service provider (Step 312). The printed digital images are then sent or delivered to the requesting individual (Step 314) using an address of record in a database maintained by the service provider. The address of record can be an address corresponding to the user of the mobile telephony device 100.

Alternatively or additionally, the payment information is stored by the printing system 200, such as within the database 208, if the requester is a registered member of the service provider and has provided this information to the service provider at an earlier time. As such, the payment information is not transmitted to the printing system 200, but is rather accessed by the at least one processor 202 when a print job request is received from a mobile telephony device corresponding to a registered member of the service provider.

The various costs or prices for color calibrating and printing the digital images can be fixed and stored within a memory module of the at least one processor 202 or within the database 208. The costs of printing the digital images can also be variable based on several factors, such as the identity of the individual requesting the printing of the digital images, the make and model of the mobile telephony device, method of payment, number of digital images printed, address of which the printed digital images are to be shipped, whether the requesting individual is a registered member of the service provider, etc.

## Claims

1. A mobile telephony device comprising:
a print request dedicated key;
a digital image acquiring assembly for acquiring at least one digital image; and
a processor in operative communication with the print request dedicated key for initiating printing of the at least one digital image in response to selection of the print request dedicated key by a user of the mobile telephony device.

2. The mobile telephony device according to Claim 1, wherein the processor includes a memory module configured for storing digital images acquired by the digital image acquiring assembly, including the at least one digital image.

3. The mobile telephony device according to Claim 1, wherein the processor includes a transmission module programmed with transmission instructions for transmitting the at least one digital image in response to the selection of the print request dedicated key.

4. The mobile telephony device according to Claim 3, wherein the processor further includes a payment module programmed with payment-related information capable of being transmitted by the transmission module for use in effecting payment to one of a service provider and an order fulfillment location for printing the at least one digital image.

5. The mobile telephony device according to Claim 4, wherein the payment-related information includes one of an account number and an identification code for enabling the service provider to identify a user and correlate the identified user to a corresponding payment source.

6. The mobile telephony device according to Claim 4, wherein the payment-related information includes one of an account number and an identification code for enabling the service provider to identify a user and correlate the identified user to user printing preferences for use in printing the at least one digital image.

7. The mobile telephony device according to Claim 4, wherein the payment-related information includes payment source information.

8. The mobile telephony device according to Claim 7, wherein the payment source information includes at least one of credit card information corresponding to a credit card and bank account information corresponding to a bank account.

9. A printing system comprising:
at least one processor configured to receive a digital image from a mobile telephony device, the at least one processor having a digital image processing module for analyzing at least one color-related attribute of the digital image; and
a printing device having a digital image printing assembly for printing the digital image.

10. A method for color calibrating and printing a digital image, the method comprising:
receiving a digital image by a printing system after user selection of a print request dedicated key of a mobile device;
determining whether to color calibrate the digital image and color calibrating the digital image, if it is determined to color calibrate the digital image; and
printing the digital image.
